# EUROPÄISCHE PATENTSCHRIFT

(11) **EP 0 451 520 B1**
(45) Veröffentlichungstag und Bekanntmachung des Hinweises auf die Patenterteilung: **26.06.1996**
(21) Anmeldenummer: 91103800.8
(22) Anmeldetag: 13.03.1991
(51) Int. Cl.: G01S 5/14

(54) **Verfahren zur Bestimmung des Abbaufortschrittes und der abgebauten Massen in einem Tagebau mittels Satelliten-Geodäsie**
Method of determining the progress and the amount produced in open-pit mine using satellite geodesy
Procédé de détermination du progrès et de la masse produite dans une mine à ciel ouvert utilisant des satellites en géodésie

(30) Priorität: 07.04.1990 DE 4011316
(43) Veröffentlichungstag der Anmeldung: 16.10.1991
(73) Patentinhaber: Rheinbraun Aktiengesellschaft, 50935 Köln (DE)
(72) Erfinder: Duddek, Herbert, Dipl.-Ing., W-5010 Bergheim (DE); Klemmer, Wilfried, Dipl.-Ing., W-5377 Dahlem (DE); Koeppen, Herbert, Dipl.-Ing., W-5010 Bergheim 3 (DE)
(74) Vertreter: Koepsell, Helmut, Dipl.-Ing.

(56) Entgegenhaltungen:
- WO-A-87/06713
- "Moderne Technologien und Entwicklungen im Markscheidewesen" Jubil umskolloquium, Clausthal-Zellerfeld 14/15 Mai 1986,Heft 10/1986,S.167-200 H. Duddek:"Der heutige Verfahrensstand der markscheiderischen Tagebauvermessung im Rheinischen Braunkohlenrevier"

## Beschreibung

Die Erfindung betrifft ein Verfahren zur Bestimmung des Abbaufortschrittes und der abgebauten Massen in einer Lagerstätte in einem Tagebau, bei welchem beim Abbauen der Massen in der Lagerstätte die geodätische Position eines Abschnittes eines Groß-Gewinnungsgerätes ermittelt wird, welches eine ortsbewegliche Tragkonstruktion aufweist, an welcher der Abschnitt bewegbar angebracht ist, der wenigstens eine Gewinnungseinrichtung trägt, wobei zur Bestimmung dieser geodätischen Position die Meßsignale von mindestens vier Satelliten von einem ersten Empfänger, der auf dem bewegbaren Abschnitt angebracht ist, empfangen werden.

Zur Bestimmung der geodätischen Position, d. h. der Längen-, Breiten- und Höhenkoordinaten, eines Punktes mittels Satelliten-Geodäsie sind grundsätzlich mindestens vier Satelliten erforderlich, deren ausgesendeten Signale von einem Empfänger, der dem zu bestimmenden Punkt entspricht, gleichzeitig empfangen werden können. Die Koordinaten des zu bestimmenden Punktes werden dabei in der Weise ermittelt, daß jeweils die Entfernung von diesem Punkt zu drei Satelliten bestimmt wird, wobei zur Bestimmung der Entfernung die Laufzeit, d. h. die Zeitdifferenz zwischen Ankunfts- und Aussendezeit, der Sendesignale herangezogen wird. Da aber die Satelliten einerseits und der Empfänger andererseits unterschiedliche Zeitmeßsysteme aufweisen, ist der vierte Satellit zur Angleichung der Zeitsysteme und somit zur Bestimmung der Bezugszeit notwendig. Damit ist gewährleistet, daß die tatsächlichen Laufzeiten der Signale ermittelt werden können. Da die jeweiligen Koordinaten der Satelliten bekannt sind, können aus den jeweiligen Entfernungen und der Zeitangleichung zum Empfänger dessen Koordinaten eindeutig bestimmt werden.

Zur Satelliten-Geodäsie ist beispielsweise das im Aufbau befindliche Global-Positioning-System (GPS) der USA geeignet. Bei diesem System sind mindestens 21 Navigationssatelliten geplant, die die Erde umgebend so angeordnet sind, daß von jeder Stelle der Erde zu jeder Zeit mindestens vier Satelliten gleichzeitig anpeilbar sind.

Bei einer Koordinatenbestimmung mittels Satelliten-Geodäsie erreicht man bei einer absoluten Positionsmessung, d. h., wenn die Koordinaten eines Punktes direkt aus den gemessenen Entfernungen ermittelt werden, derzeit eine Genauigkeit von ± 10 m. Diese Abweichung ist insbesondere dadurch begründet, daß die Sendesignale der Satelliten in Form von elektromagnetischen Wellen auf ihrem Weg zur Erde unterschiedliche Medien durchlaufen müssen, die die Wellen unterschiedlich durch Brechung ablenken und deren Laufzeit unterschiedlich beeinflussen. Es ist daher zweckmäßig, einen weiteren Empfänger vorzusehen, der in der Nähe des zu bestimmenden Punktes angeordnet ist und dessen Koordinaten bekannt sind. Durch das sogenannte Differentialmeßverfahren können dann die nicht voraussehbaren und nicht berechenbaren Einflüsse der unterschiedlichen Medien auf die Wellenausbreitung eliminiert werden, da davon auszugehen ist, daß die Signale zu den jeweiligen Empfängern in etwa die gleichen Wege durchlaufen. Bei dieser Meßmethode kann derzeit eine Genauigkeit von ca. ± 0,01 m erreicht werden. Dazu wird auf WO 87/06713 verwiesen, auf deren Offenbarungsgehalt ausdrücklich Bezug genommen wird.

Die Zeitabstände zwischen zwei Koordinatenbestimmungen mittels Satelliten-Geodäsie hängen unter anderem ab von der Rechengeschwindigkeit des Rechners, der die empfangenen Signale auswertet. Je nach Rechenleistung können die Meßintervalle beispielsweise nur eine Sekunde betragen. Diese kurze Ermittlungszeit der Koordinaten ermöglicht eine nahezu kontinuierliche Erfassung der Positionen von beweglichen Geräten.

Die Möglichkeit der relativ genauen Koordinatenbestimmung bei kurzen Meßintervallen mittels Satelliten-Geodäsie soll gemäß der Erfindung zur Bestimmung der Koordinaten der Gewinnungseinrichtung eines ortsbeweglichen Groß-Gewinnungsgerätes verfügbar gemacht werden. Dabei handelt es sich insbesondere um die Position des Schaufelrades eines im Tagebau eingesetzten Schaufelradbaggers. Das die Gewinnungseinrichtung darstellende Schaufelrad wird von einem Ausleger getragen, der dem einleitend erwähnten Abschnitt des Gewinnungsgerätes entspricht. Dieser Ausleger ist im allgemeinen in senkrechter Ebene schwenkbar an der ortsbeweglichen Tragkonstruktion des Schaufelradbaggers angebracht. Es wird im folgenden überwiegend von einem Schaufelradbagger gesprochen, ohne daß damit jedoch eine Einschränkung verbunden sein soll.

Für das Betreiben eines Tagebaus sind die Bilanz der gewonnenen Massen sowie die aktuelle Topographie des Tagebaus von besonderer Bedeutung. Für einen Tagebau wird im allgemeinen ein Modell der abzubauenden Lagerstätte erstellt, welches die Anordnung der einzelnen Schichten der Lagerstätte, deren Mächtigkeiten usw. angibt. Bei diesen Schichten handelt es sich einmal um solche, die das nutzbare Material, beispielsweise Kohle, Braunkohle oder dergleichen, enthalten und zum anderen um die Schichten, die die Schichten des nutzbaren Materials überdecken oder auch zwischengelagert sind und weggeräumt werden müssen, um die Schichten mit nutzbarem Material abbauen zu können. Anhand dieses Lagerstättenmodells kann durch einen Vergleich zwischen der Ausgangssituation und der aktuellen Topographie festgestellt werden, welche Mengen welcher Materialien wo bereits abgeräumt worden sind. D. h., daß durch einen derartigen Vergleich immer die aktuelle Topographie des Tagebaus wiedergegeben wird. Zur Feststellung der abgeräumten Massen nach Menge, Lage und Beschaffenheit sind bisher manuelle Vermessungsverfahren üblich, so daß wegen des damit verbundenen relativ hohen Zeitaufwandes beispielsweise lediglich einmal in der Woche ein genauer Plan erstellt und das Lagerstättenmodell aktualisiert werden kann.

In der Veröffentlichung "Moderne Technologien und Entwicklungen im Markscheidewesen", Jubiläumskolloguium Clausthal-Zellerfeld, 14./15. Mai 1986, Heft 10/86, S.177 ff. werden Möglichkeiten beschrieben, über die Satelliten-Geodäsie zu einer automatischen Standortbestimmung eines Schaufelradbaggers und des Schaufelrades des Baggers zu kommen, um so über die aktuelle Tagebautopographie zu Massenbilanzen zu kommen, die Aufschluß geben über die bereits abgebauten Massen und über die noch in der Lagerstätte befindlichen Massen. Dabei wird auch von der Erstellung eines Modells der Lagerstätte gesprochen, welches so zu unterteilen ist, daß adressierbare Kuben in der Größe von etwa 4 x 4 x 4 m entstehen. Dabei wird in zutreffender Weise davon ausgegangen, daß überall dort, wo die Position des Schaufelrades geortet wurde, kein Material mehr in der Lagerstätte vorhanden sein kann. Bei den in dieser Vorveröffentlichung beschriebenen Versuchen ging es jedoch nur darum, grundsätzlich die Frage zu klären, ob ein Empfänger bzw. die Antenne desselben, die auf dem Schaufelrad-Ausleger angebracht ist, während des Betriebes des Schaufelradbaggers eine ausreichend genaue kontinuierliche Positionsbestimmung der Antenne ermöglicht. Die praktische Anwendbarkeit konnte bei diesen Versuchen nicht getestet werden, da es an den dazu erforderlichen Voraussetzungen fehlte.

Selbst wenn der Empfänger bzw. dessen Antenne am Schaufelrad selbst angebracht werden könnte - was selbstverständlich nicht der Fall ist, da das Schaufelrad während der Gewinnungsarbeiten rotiert -, würde dies keinen Aufschluß über die Position des Schaufelrades geben, die ausreichend genau wäre, um Schlußfolgerungen auf die abgeräumten Massen zuzulassen. Schaufelräder moderner Schaufelradbagger haben eine sehr große räumliche Ausdehnung. Die Durchmesser können mehr als 20 m betragen. D. h., daß auch dann, wenn der Empfänger am Schaufelrad angebracht werden könnte, lediglich die Koordinaten eines Punktes am Schaufelrad ermittelt werden könnten, der jedoch keinerlei Auskunft über die Lage und Ausrichtung des Schaufelrades im Raum gibt. Diese Kenntnisse wären aber erforderlich, um ermitteln zu können, in welchem Bereich das Schaufelrad jeweils Material aus der Lagerstätte abgeräumt hat, zumal immer nur bestimmte Bereiche des Umfangs des Schaufelrades in Eingriff mit der Lagerstätte sind.

Die vorbeschriebenen Unzulänglichkeiten gelten natürlich erst recht dann, wenn der Empfänger in einem Abstand von der Gewinnungseinrichtung, also z. B. in einem Abstand vom Schaufelrad, am Ausleger angebracht ist. Die großen Dimensionen des Schaufelrades machen es darüber hinaus notwendig, den Empfänger bzw. dessen Antenne in einem relativ großen Abstand vom Schaufelrad anzubringen, da sonst in Abhängigkeit von der Stellung des das Schaufelrad tragenden Auslegers und damit auch der Stellung des Schaufelrades die Möglichkeit besteht, daß das Schaufelrad in eine Position gelangt, in welcher es sich zwischen wenigstens einem der Satelliten und der Antenne befindet und letztere somit gegenüber dem Satelliten abschirmt. Der Empfang von Signalen dieses Satelliten wäre dann nicht möglich. Der somit erforderliche größere Abstand des Empfängers bzw. der Antenne desselben vom Schaufelrad ist zwar festgelegt. Jedoch reicht auch hier die Bestimmung des Standortes des Empfängers nicht aus, um daraus die Position des Schaufelrades zu errechnen, da die Kenntnis lediglich der Koordinaten des der Antenne entsprechenden Punktes ebenfalls keinerlei Rückschluß auf die räumliche Orientierung des Auslegers ermöglicht. Die Kenntnis dieser räumlichen Orientierung ist jedoch erforderlich, um die Position und die Ausrichtung des Schaufelrades ermitteln zu können.

Demzufolge liegt der Erfindung die Aufgabe zugrunde, das Verfahren der einleitend beschriebenen Art so zu verbessern, daß die Bestimmung der Position der Gewinnungseinrichtung, z. B. eines Schaufelrades, eines ortsbeweglichen Groß-Gewinnungsgerätes mit ausreichender Genauigkeit unter allen im praktischen Betrieb vorkommenden Bedingungen möglich ist. Die Position des in Eingriff mit der Lagerstätte befindlichen Abschnittes der Gewinnungseinrichtung soll so genau ermittelt werden können, daß eine realitätsnahe Bilanz der bereits gewonnenen Massen und eine entsprechend genauer aktueller Tagebauplan erstellt werden können.

Diese Aufgabe wird unter Anwendung der Merkmale im Kennzeichen des Anspruches 1 gelöst.

Durch die gleichzeitige Bestimmung der Koordinaten der beiden Empfänger kann die Orientierung des in Eingriff mit der Lagerstätte befindlichen Abschnittes der Gewinnungseinrichtung ermittelt werden. Dazu ist es erforderlich, daß der weitere Empfänger derart auf dem Groß-Gewinnungsgerät angeordnet ist, daß sich aus der Position jedes Empfängers und damit aus dem Abstand zwischen den beiden Empfängern die Ausrichtung des Auslegers im Raum und somit die Lage der Gewinnungseinrichtung eindeutig bestimmen lassen. Insbesondere muß der weitere Empfänger so angebracht sein, daß letzterer keine unkontrollierten Bewegungen relativ zum ersten Empfänger durchführen kann. Eine Möglichkeit stellt beispielsweise die Anordnung des weiteren Empfängers an dem anderen, der Gewinnungseinrichtung abgekehrten Ende des Auslegers dar. Diese Anordnung des zweiten Empfängers auf dem Ausleger hätte allerdings den Nachteil, daß der Empfänger von der Tragkonstruktion des Groß-Gewinnungsgerätes überschattet werden könnte. Besonders zweckmäßig ist daher die Anordnung des weiteren Empfängers auf dem vertikal nach oben weisenden Pylon oder einem vergleichbaren Bauteil der Tragkonstruktion des Groß-Gewinnungsgerätes. Dieser Punkt ist nahezu frei von allen Störeinflüssen, die durch das Groß-Gewinnungsgerät bewirkt werden könnten und weist somit ausgezeichnete Empfangsmöglichkeiten auf. Der Ausleger ist zwar bezüglich der Tragkonstruktion und damit auch des Pylons in der Vertikalen verschwenkbar angebracht. Jedoch ergibt sich die Richtung, in welcher sich die Gewinnungseinrichtung, z. B. das Schaufelrad, befindet, eindeutig aus dem - sich ggf. ändernden - Abstand zwischen den Empfängern, der einer definierten Winkellage des Auslegers entspricht. Der Abstand ist, wie bereits erwähnt, dabei aus den bestimmten Koordinaten ermittelbar.

Bei Anwendung der Lehre gemäß der Erfindung ist lediglich eine eventuelle Rotation des die Gewinnungseinrichtung tragenden Auslegers um die durch die beiden Empfänger verlaufende Achse nicht eindeutig bestimmbar. Eine solche Rotation entspräche im wesentlichen einer nicht vorgesehenen seitlichen Neigung des Groß-Gewinnungsgerätes, die im allgemeinen nicht oder nur in so geringem Umfang auftritt, daß sie vernachlässigbar ist.

Es gibt auch Groß-Gewinnungsgeräte, z. B. Eimerkettenbagger, bei denen das Problem, daß wenigstens einer der Empfänger gegenüber einem der Satelliten durch die Gewinnungseinrichtung abgeschirmt wird, nicht besteht. Es bestünde aber auch hier die Notwendigkeit, wenigstens zwei Empfänger vorzusehen. Allerdings wäre es unter Umständen nicht erforderlich, die Position der Gewinnungseinrichtung aus der geodätischen Position und der Orientierung im Raum des beweglichen Teiles, also z. B. des Auslegers, zu errechnen, da die Gewinnungseinrichtung, also die Eimerkette, soweit sie in Eingriff mit der Lagerstätte ist, parallel zum Ausleger verläuft.

Zur Anwendung des bereits erwähnten Differentialmeßverfahrens können die Meßsignale von mindestens vier Satelliten gleichzeitig von einem als Bezugsempfänger dienenden dritten Empfänger empfangen werden, der mit bekannter geodätischer Position ortsfest in einem Abstand vom Groß-Gewinnungsgerät angeordnet ist, und die Signale, die gleichzeitig vom ersten Empfänger, vom weiteren Empfänger und vom Bezugsempfänger empfangen werden, einem Rechnersystem zugeführt und dort die Koordinaten des ersten und des weiteren Empfängers relativ zu denen des Bezugsempfängers bestimmt werden. Dabei ist es besonders vorteilhaft, wenn der als Bezugsempfänger dienende dritte Empfänger in einer Position angeordnet wird, die einen Bezugspunkt in einem für die abzubauende Lagerstätte maßgeblichen Koordinatensystem darstellt und die ermittelten Positionen des ersten Empfängers und des weiteren Empfängers auf dem Gewinnungsgerät einem Rechner zugeführt werden, in welchem die Positionen der Empfänger in Koordinaten dieses lokalen Koordinatensystems transformiert werden. Dies ist insbesondere dann erforderlich, wenn die Position der Gewinnungseinrichtung in Bezug gesetzt werden soll zur Lagerstätte und dem bereits erwähnten Lagerstättenmodell.

Außerdem hat die Transformation der Positionskoordinaten in ein lokales Koordinatensystem den Vorteil, daß Lage und Ausrichtung der Gewinnungseinrichtung in dem Koordinatensystem des Tagebaues angegeben werden, wodurch eine Steuerung der Bewegungen und des Einsatzes des Groß-Gewinnungsgerätes vereinfacht wird.

Die Ermittlung der Positionen der Empfänger kann in zeitlichen Abständen von 0,3 sec - 600 sec erfolgen. Als besonders zweckmäßig hat es sich herausgestellt, die Ermittlung der Positionen der Empfänger in zeitlichen Abständen von 1 sec durchzuführen. In jedem Fall wird bei der so erfolgenden quasi-kontinuierlichen Ermittlung der Position auch der bei der Gewinnung von der Gewinnungseinrichtung zurückgelegte Weg erfaßt.

Unabhängig davon, ob der weitere Empfänger ebenfalls auf dem die Gewinnungseinrichtung tragenden Abschnitt des Groß-Gewinnungsgerätes oder auf dessen ortsbeweglicher Tragkonstruktion angeordnet ist, welche den beweglichen Abschnitt trägt, können Lage und Ausrichtung der Gewinnungseinrichtung bis auf die vernachlässigbare seitliche Neigung des Groß-Gewinnungsgerätes eindeutig bestimmt werden, wobei die Position des in Eingriff befindlichen Abschnittes der Gewinnungseinrichtung durch einfache geometrische Beziehungen, die von der Ausgestaltung des jeweiligen Groß-Gewinnungsgerätes abhängen, ermittelt werden kann.

Nachfolgend wird die Erfindung anhand eines Ausführungsbeispieles näher beschrieben. Es zeigen:
- Fig. 1: ein Schema zur Bestimmung der Position des Schaufelrades eines Schaufelradbaggers unter Anwendung der Satelliten-Geodäsie,
- Fig. 2: einen Schaufelradbagger in Seitenansicht,
- Fig. 3: eine Ausführungsform der zur Durchführung des Verfahrens erforderlichen Hardware-Komponenten und deren Verknüpfung und
- Fig. 4: im Schema einen Ausschnitt aus einem Lagerstättenmodell.

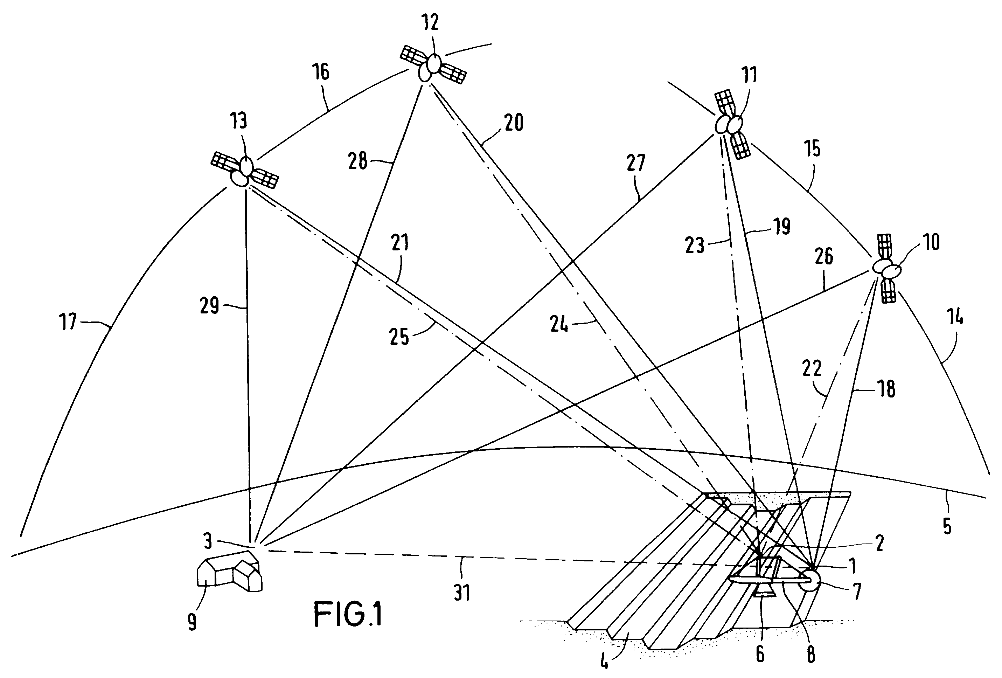

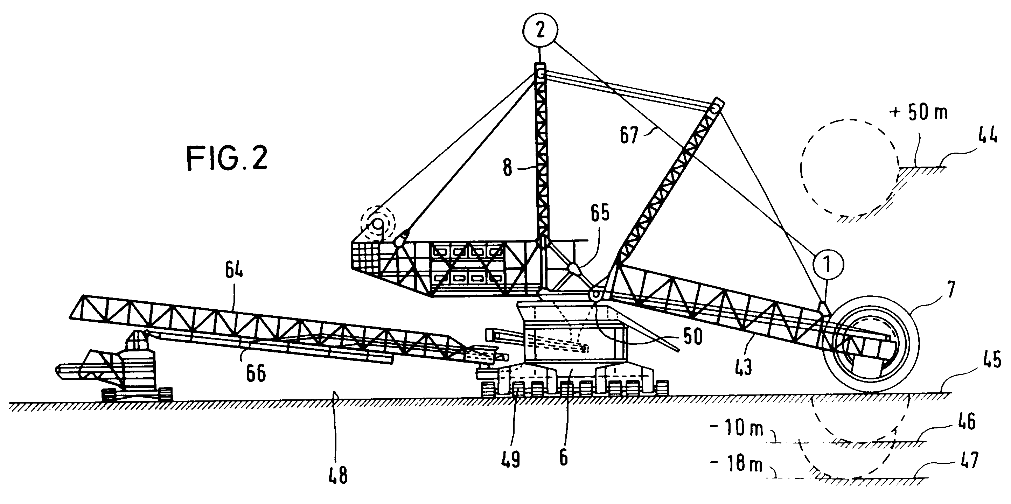

Der in Fig. 2 der Zeichnung dargestellte Schaufelradbagger 6 weist eine Tragkonstruktion 65 auf, die mit einem Fahrwerk 49 versehen ist. Die Tragkonstruktion 65 ist gegenüber der Unterkonstruktion mit dem Fahrwerk um eine vertikale Achse 50 schwenkbar. An der Tragkonstruktion 65 ist ein Ausleger 43 in senkrechter Ebene schwenkbar angebracht, der an seinem freien Ende ein Schaufelrad 7 trägt. Der Schaufelradbagger befindet sich in einem Tagebau 4 auf der Erdoberfläche im Einsatz, die durch den Horizont 5 begrenzt ist (Fig. 1).

In der Nähe des drehbar angeordneten Schaufelrades 7 ist am Ausleger 43 ein erster Empfänger 1 angeordnet. Auf dem Pylon 8 der Tragkonstruktion 65 befindet sich ein weiterer Empfänger 2. Ein dritter Empfänger 3 befindet sich ortsfest in einem Gebäude 9, das außerhalb des Tagebaus 4 angeordnet ist (Fig. 1).

Innerhalb der Radiosichtweite der Empfänger 1, 2 und 3 wird die Erde von vier Satelliten 10, 11, 12 und 13 umkreist. Die Satelliten bewegen sich jeweils auf Umlaufbahnen, die voneinander verschieden sein können. Der Satellit 10 bewegt sich auf der Umlaufbahn 14, der Satellit 11 auf der Umlaufbahn 15, der Satellit 12 auf der Umlaufbahn 16 und der Satellit 13 auf der Umlaufbahn 17 um die Erde. Die Umlaufbahnen und die Koordinaten der Satelliten sind zu jedem Zeitpunkt bekannt und werden mit den Signalen ausgesendet, die von den Satelliten kommen.

Wie aus der Übersicht gemäß Fig. 1 erkennbar, stehen die Empfänger 1, 2 und 3 über die Meßstrahlen 18, 19, 20, 21 bzw. 22, 23, 24, 25 bzw. 26, 27, 28, 29 mit jeweils jedem der Satelliten 10, 11, 12, 13 in Verbindung.

Sobald einer der Satelliten 10 - 13 außerhalb der Radiosichtweite eines der Empfänger 1 - 3 gerät, tritt an seine Stelle ein anderer Satellit des Systems. Es ist dafür Sorge getragen, daß sich stets vier Satelliten innerhalb der Radiosichtweite der Empfänger 1 - 3 befinden. Demnach stellt die Fig. 1 einen zeitlichen Ausschnitt aus der Sende-Empfangssituation zwischen den Empfängern 1 - 3 und den Satelliten 10 - 13 dar. Es ist jedenfalls gewährleistet, daß zu jedem beliebigen Zeitpunkt ein Empfänger mit vier Satelliten gleichzeitig in Verbindung steht, so daß jederzeit die Koordinaten des Empfängers eindeutig bestimmt werden können.

Mit dem Fahrwerk 49 ist der Schaufelradbagger 6 auf dem Planum 48 horizontal bewegbar. An dem dem Schaufelrad 7 abgekehrten Ende weist der Schaufelradbagger einen weiteren, mit der Tragkonstruktion 65 verbundenen Ausleger 64 auf. Beide Ausleger 43 und 64 sind mit Förderbändern versehen, über die die vom Schaufelrad 7 gewonnenen Massen auf ein nachgeordnetes Förderband 66 gelangen.

Der am vorderen Abschnitt des das Schaufelrad 7 tragenden Auslegers 43 angeordnete erste Empfänger 1 ist so positioniert, daß er bzw. die ihm zugeordnete Antenne bei jeder denkbaren Position des Auslegers 43 die Signale der Satelliten 10 - 13 empfangen kann. Der auf dem Pylon 8 angeordnete weitere Empfänger wird durch keine Aufbauten des Schaufelradbaggers überschattet, so daß auch der weitere Empfänger 2 stets mit den vier Satelliten 10 - 13 in Verbindung stehen kann.

Bei dem Verfahren gemäß der Erfindung werden die Koordinaten der Empfänger 1 und 2 gleichzeitig mittels Satelliten-Geodäsie bestimmt. Mit den Koordinaten liegt der Abstand zwischen den Empfängern 1 und 2 fest. Diesem Abstand läßt sich eindeutig eine Winkellage des Auslegers 43 in einer vertikalen Ebene zuordnen, wodurch auch die Lage des Schaufelrades 7 bezüglich der Empfänger 1 und 2 eindeutig festliegt. Da die Empfänger 1, 2 bezüglich der Drehachse 50 keine relative Bewegung zueinander ausführen, sind mit der Richtung der Geraden 67, die durch die beiden Empfänger 1, 2 verläuft, auch die Ausrichtung des Auslegers 43 und damit die Lage des Schaufelrades (7) im Raum festgelegt. Die vernachlässigbare seitliche Neigung des Schaufelradbaggers 6 kann dabei unberücksichtigt bleiben.

Ist die seitliche Neigung des Groß-Gewinnungsgerätes 6 nicht vernachlässigbar, muß ein weiterer Empfänger am Gerät vorgesehen werden, mit dem die Neigung erfaßt wird.

Fig. 2 läßt erkennen, daß der in Eingriff befindliche Teil des Umfanges des Schaufelrades 7 abhängt von der Winkellage des Auslegers 43 in der vertikalen Ebene und dem Verlauf der Fläche der abzubauenden Lagerstätte, an welcher das Schaufelrad jeweils angreift. Je nach der Lage des in Eingriff befindlichen Bogenabschnittes auf dem Umfang des Schaufelrades 7 ist die Winkellage der durch die Empfänger 1, 2 verlaufenden Geraden 67 unterschiedlich. Es ist möglich, bei einer Positionsbestimmung des Schaufelrades 7 den in Eingriff befindlichen Bogenabschnitt des Schaufelrades 7 festzustellen und so den Bereich der Lagerstätte geodätisch zu bestimmen, der gerade abgeräumt wird. Es ist der Bereich, mit dem sich das Schaufelrad jeweils in Eingriff befindet.

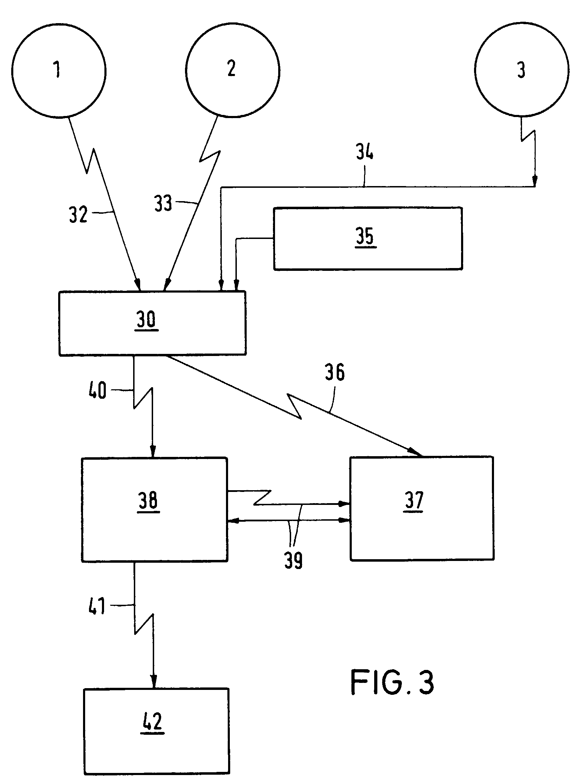

In Fig. 3 sind das Ausführungsbeispiel eines Rechensystems und eine mögliche Verknüpfung seiner Komponenten dargestellt. Die Empfänger 1 und 2, die auf dem Schaufelradbagger 6 angeordnet sind, speisen über die Verbindungen 32, 33 ihre Meßdaten in einen Prozeßrechner 30 ein. Dieser kann auf dem Schaufelradbagger 6, beispielsweise innerhalb dessen Füherstand angeordnet sein. Der dritte, ortsfest im Gebäude 9 am Rand des Tagebaus angeordnete Empfänger 3 ist über die Verbindung 34 ebenfalls mit dem Prozeßrechner 30 verbunden. Die Verbindungen 32 - 34 können beispielsweise Leitungen oder Funkstrecken zur Datenübertragung sein.

Dem Prozeßrechner 30 ist ferner eine Steuereinheit 35 zugeordnet, über welche Daten im Hinblick auf die Art des von dem Schaufelradbagger 6 gewonnenen Materials und Signale für einen Stop oder Anlaufen des Schaufelrades 7 und Signale für den in Eingriff befindlichen Bogenabschnitt des Schaufelrades übermittelt werden können.

Sowohl der Prozeßrechner 30 als auch der mit ihm kontinuierlich über die Leitung 40 in Verbindung stehende Hauptrechner 38 können Informationen bzw. Daten enthalten, welche ein digitales Modell der Lagerstätte betreffen, die von dem Schaufelradbagger 6 bearbeitet wird. Es ist üblich, einen Rechner 37 zur Betriebsüberwachung vorzusehen, welcher statistische Daten des Tagebaubetriebes sammelt und vorhält. Solche Daten bestehen beispielsweise aus Informationen über Betrieb oder Störungen von Bandanlagen oder über die Belegung von Bandwaagen usw. Die Verbindung 36 zwischen dem Prozeßrechner 30 und dem Rechner 37 wird beispielsweise über eine Funkstrecke 39 oder ein Datenkabel hergestellt.

Der Rechner 37 zur Betriebsüberwachung steht ebenfalls mit dem Hauptrechner 38 in Verbindung, der beispielsweise in der Markscheiderei installiert ist. Über die wechselseitigen Verbindungen 39 werden zwischen den Rechnern 37 und 38 Korrekturen ausgetauscht. Andererseits steht der in der Markscheiderei installierte Hauptrechner 38 auch über die Verbindung 40 mit dem Prozeßrechner 30 auf dem Schaufelradbagger 6 auf Abruf in Verbindung. Hiermit ist eine Verknüpfung zwischen den drei Rechnern 30, 37 und 38 hergestellt, die eine Kommunikation dieser drei Rechner untereinander ermöglicht. Weiterhin steht der Hauptrechner 38 noch über eine Verbindung 41 mit einem Großrechner 42 in Verbindung, der an einem anderen Ort aufgestellt sein kann. In dem Großrechner sind sämtliche, auch über den Abbau hinausgehende Daten des Betriebsgeschehens gespeichert. Die Übertragung der Daten über die gezeigten Verbindungen 36, 39, 40 und 41 kann sowohl über Funk als auch über Kabel, beispielsweise Kupfer- oder Glasfaserkabel, erfolgen.

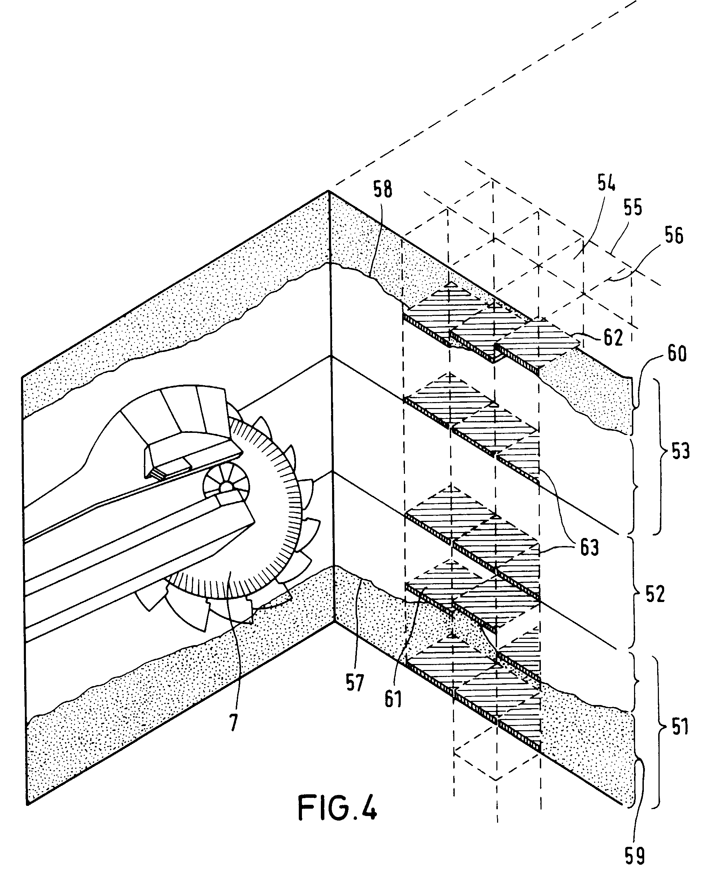

Einzelheiten des Abbaus sind in Fig. 4 schematisch dargestellt. Das Schaufelrad 7 wird so bewegt, daß es nacheinander die Bereiche abbaggert, die innerhalb des in Fig. 4 dargestellten Lagerstättenmodells als Baggerscheiben 51, 52, 53 bezeichnet sind. Die Baggerscheiben 51 - 53 sind vertikal von unten nach oben übereinander angeordnet und entsprechen jeweils der Mächtigkeit einer Schicht, welche von dem Schaufelrad 7 im Verlauf eines einzigen Schnittes bei konstant eingehaltener Höhenstellung durch Verschwenken des Schaufelradbaggers 6 um die vertikale Achse 50 abgebaggert werden kann.

Der Tagebau und somit die Baggerscheiben 51 - 53 sind im Modell in ein Raster von quadratischen, vertikal verlaufenden Säulen 54 unterteilt, deren Querschnittsflächen ein Gitter mit den Kantenlängen 55, 56 bilden, die beispielsweise eine Länge von jeweils 4 m aufweisen. Die Säulen erstrecken sich über die gesamte Tiefe des Tagebaus, zumindest jedoch über alle drei Baggerscheiben 51 - 53. Jeder der Säulen 54 ist im Modell eine bestimmte Nummer oder Adresse zugeordnet, die in wenigstens einem der Rechner 30 oder 38 gespeichert ist und der Position der Säulen entspricht. Bei der Erstellung einer Massenbilanz wird so verfahren, daß überall dort, wo das Schaufelrad 7 bzw. der in Eingriff befindliche Umfang des Schaufelrades 7 innerhalb des Lagerstättenmodells ermittelt wird, die noch vorhandene Masse aus der Säule 54 oberhalb der Position des Schaufelrades 7 rechnerisch aus dem Lagerstättenmodell herausgenommen wird. In Abhängig davon, ob es sich um Kohle, Abraum oder Löß handelt, werden die abgeräumten Materialien bestimmten Rechnerspeichern zugeordnet, wodurch eine aktuelle Massenbilanz erstellt werden kann. Die im Lagerstättenmodell noch verbliebenen Abraum- und Kohlemengen und die tatsächlich abgebauten Materialien können auf diesem rechnerischen Wege genau bestimmt werden.

Darüber hinaus läßt sich aus den jeweils letzten ermittelten oberen Begrenzungen der Säulen 54 die aktuelle Tagebaugeometrie aus dem Lagerstättenmodell laufend ableiten und ggf. über einen im Führerstand des Schaufelradbaggers 6 angeordneten Bildschirm anzeigen oder anderweitig über Drucker oder Plotter ausdrucken.

Wie in der Fig. 4 erkennbar, werden die unterste und oberste Baggerscheibe 51 bzw. 53 jeweils von einer Trennlinie 57 bzw. 58 fortlaufend durchzogen. In den Teilbereichen 59 bzw. 60 befindet sich jeweils ein vom übrigen Material der betreffenden Baggerscheibe 51 bzw. 53 unterschiedliches Material, also beispielsweise Kohle gegenüber Abraum oder umgekehrt.

Im Bereich der Säulen 54 markieren die Linien 57 bzw. 58 innerhalb der Baggerscheiben 51 und 53 Trennflächen 61 und 62. Neben den Massen aus den Säulen 54 gehen diese Trennflächen 61 und 62 in die rechnerische Bilanzierung des Abraumgeschehens mit ein. Auf der Grundlage der dem Abbau vorausgegangenen geologischen Lagerstättenprojektion bzw. der Bergbauplanung sind die Trennflächen 61 und 62 bereits innerhalb der Säulen 54 programmäßig vorgegeben. Diese Vorgabe ist allerdings so genau oder ungenau wie die geologische Projektion selbst. Durch die geodätische Standortbestimmung des Schaufelrades 7 während des Abbaus ist es möglich, die Lage der geschnittenen Trennflächen 61 und 62 mit einer größeren Genauigkeit zu bestimmen. Hierzu gibt der Führer des Schaufelradbaggers entsprechende Steuerbefehle an den Prozeßrechner 30. Diese Steuerbefehle werden sodann fortlaufend dem fortschreitenden Abbaumodell zugrunde gelegt. Die Genauigkeit der Massenbilanzierung kann damit vergrößert werden.

Außer der Positionsbestimmung des Schaufelrades eines Schaufelradbaggers ist es im Rahmen der Erfindung beispielsweise auch möglich, die Position des Abwurfendes eines Absetzers zu bestimmen. Dadurch können z. B. Ort und Menge und ggf. auch die Art der abgesetzten Materialien zu beliebigen Zeitpunkten ermittelt werden.

Ein besonderer Vorteil der Erfindung liegt darin, daß nahezu zu jedem Zeitpunkt eine aktuelle Massenbilanz und eine aktuelle Tagebaugeometrie erstellt werden können. Die Bestimmung der Koordinaten der jeweiligen Empfänger erfolgt dabei näherungsweise kontinuierlich, z. B. einmal pro Sekunde. Die Daten sind im wesentlichen sofort verfügbar, wodurch eine effektive Steuerung und Planung des Einsatzes eines Groß-Gewinnungsgerätes innerhalb des Tagebaus möglich wird.

## Patentansprüche

1. Verfahren zur Bestimmung des Abbaufortschrittes und der abgebauten Massen in einer im Tagebau abzubauenden Lagerstätte, bei welchem beim Abbauen der Masse in der Lagerstätte die geodätische Position eines Abschnittes eines Groß-Gewinnungsgerätes ermittelt wird, welches eine ortsbewegliche Tragkonstruktion aufweist, an welcher der Abschnitt bewegbar angebracht ist, der wenigstens eine Gewinnungseinrichtung trägt, und zur Bestimmung der geodätischen Position die Meßsignale von mindestens vier Satelliten von einem ersten Empfänger, der auf dem beweglichen Abschnitt angeordnet ist, empfangen werden, dadurch gekennzeichnet, daß die Meßsignale der mindestens vier Satelliten von wenigstens einem weiteren Empfänger, der in einer gegenüber dem ersten Empfänger definierten Lage auf dem Groß-Gewinnungsgerät angeordnet ist, empfangen werden und die empfangenen Signale einem Rechnersystem zugeführt werden, in welchem die Positionen des ersten und des weiteren Empfängers und daraus die Orientierung im Raum des die Gewinnungseinrichtung tragenden Abschnittes des Groß-Gewinnungsgerätes ermittelt werden, und in dem Rechnersystem ein Modell der Lagerstätte gespeichert ist, in welchem in Abhängigkeit vom zurückgelegten Weg der Gewinnungseinrichtung die bereits abgebauten Teile der Lagerstätte kenntlich gemacht werden.

2. Verfahren nach Anspruch 1, dadurch gekennzeichnet, daß die Position der von dem bewegbaren Abschnitt des Gewinnungsgerätes getragene Gewinnungseinrichtung, an welcher kein Empfänger für die Meßsignale von mindestens vier Satelliten angeordnet werden kann, aus der geodätischen Position und der Orientierung im Raum des beweglichen Abschnittes bestimmt wird.

3. Verfahren nach Anspruch 1, dadurch gekennzeichnet, daß die Meßsignale von mindestens vier Satelliten gleichzeitig von einem als Bezugsempfänger dienenden dritten Empfänger empfangen werden, der mit bekannter geodätischer Position ortsfest in einem Abstand vom Groß-Gewinnungsgerät angeordnet ist, und die Signale, die gleichzeitig vom ersten Empfänger, vom weiteren Empfänger und vom Bezugsempfänger empfangen werden, einem Rechnersystem zugeführt und dort die Koordinaten des ersten und des weiteren Empfängers relativ zu denen des Bezugsempfängers bestimmt werden.

4. Verfahren nach Anspruch 3, dadurch gekennzeichnet, daß der als Bezugsempfänger dienende dritte Empfänger in einer Position angeordnet wird, die einen Bezugspunkt in einem für die abzubauende Lagerstätte maßgeblichen Koordinatensystem darstellt, und die ermittelten Positionen des ersten Empfängers und des weiteren Empfängers auf dem Gewinnungsgerät einem Rechner zugeführt werden, in welchem die Positionen der Empfänger in Koordinaten dieses lokalen Koordinatensystems transformiert werden.

5. Verfahren nach Anspruch 1, dadurch gekennzeichnet, daß die Ermittlung der Positionen der Empfänger in zeitlichen Abständen von 0,3 sec. bis 600 sec. erfolgt.

6. Verfahren nach Anspruch 1, dadurch gekennzeichnet, daß die Ermittlung der Position der Empfänger in zeitlichen Abständen von 1 sec erfolgt.

7. Verfahren nach Anspruch 1, dadurch gekennzeichnet, daß der weitere Empfänger ebenfalls auf dem die Gewinnungseinrichtung tragenden Abschnitt des Groß-Gewinnungsgerätes angeordnet ist.

8. Verfahren nach Anspruch 1, dadurch gekennzeichnet, daß der weitere Empfänger auf der ortsbeweglichen Tragkonstruktion angeordnet ist, welche den beweglichen Abschnitt trägt, und aus den ermittelten Positionen des ersten und des weiteren Empfängers auch deren Abstand voneinander im Rechnersystem ermittelt wird.

9. Verfahren nach Anspruch 1 und 3, dadurch gekennzeichnet, daß als Groß-Gewinnungsgerät ein Schaufelradbagger verwendet wird.

## Claims

1. A method of determining mining progress and the masses mined in a deposit to be mined in open cast mining, wherein when mining the mass in the deposit the geodetic position of a portion of a large-scale extraction apparatus is ascertained, said apparatus having a movable support structure on which the portion which carries at least one extraction device is movably mounted, and for determining the geodetic position the measurement signals of at least four satellites are received by a first receiver which is arranged on the movable portion, characterised in that the measurement signals of the at least four satellites are received by at least one further receiver which is arranged on the large-scale extraction apparatus in a position which is defined with respect to the first receiver, and the received signals are fed to a computing system in which the positions of the first and the further receivers and therefrom the orientation in space of the portion of the large-scale extraction apparatus which carries the extraction device are ascertained, and a model of the deposit is stored in the computing system, in which model the parts of the deposit which have already been mined are identified in dependence on the distance covered by the extraction device.

2. A method according to claim 1 characterised in that the position of the extraction device which is carried by the movable portion of the extraction apparatus and on which no receiver for the measurement signals of at least four satellites can be arranged is determined from the geodetic position and the orientation in space of the movable portion.

3. A method according to claim 1 characterised in that the measurement signals of at least four satellites are simultaneously received by a third receiver which serves as reference receiver and which is arranged with a known geodetic position at a stationary location at a spacing from the large-scale extraction apparatus, and the signals which are simultaneously received by the first receiver, the further receiver and the reference receiver are fed to a computing system and there the co-ordinates of the first and the further receivers are determined relative to those of the reference receiver.

4. A method according to claim 3 characterised in that the third receiver which serves as a reference receiver is arranged in a position which represents a reference point in a co-ordinate system which is relevant for the deposit to be mined, and the ascertained positions of the first receiver and the further receiver on the extraction device are fed to a computer in which the positions of the receivers are transformed into co-ordinates of said local co-ordinate system.

5. A method according to claim 1 characterised in that the operation of ascertaining the positions of the receivers is effected at spacings in respect of time of 0.3 second to 600 seconds.

6. A method according to claim 1 characterised in that the operation of ascertaining the position of the receivers is effected at spacings in respect of time of 1 second.

7. A method according to claim 1 characterised in that the further receiver is also arranged on the portion of the large-scale extraction apparatus, which carries the extraction device.

8. A method according to claim 1 characterised in that the further receiver is arranged on the movable support structure which carries the movable portion, and from the ascertained positions of the first and the further receivers the spacing thereof from each other is also ascertained in the computing system.

9. A method according to claims 1 and 3 characterised in that a bucket wheel excavator is used as the large-scale extraction apparatus.

## Revendications

1. Procédé pour déterminer l'avance du travail d'extraction et les masses de matières extraites dans une exploitation minière à ciel ouvert, dans lequel on détermine la position géodésique d'une partie de référence d'une machine d'extraction à grand débit au cours du travail d'extraction de cette machine qui possède une structure porteuse, mobile sur le site et dont dépend la partie de référence qui est mobile par rapport à cette machine, cette partie portant au moins un organe d'excavation, le procédé consistant à déterminer la position géodésique en exploitant les signaux de mesure émis par au moins quatre satellites et reçus par un premier récepteur monté sur la partie mobile de référence, caractérisé en ce qu'on exploite les signaux de mesure émis par les satellites en les recevant sur au moins un autre récepteur monté sur la machine d'extraction à grand débit dans une position définie par rapport au premier récepteur, les signaux ainsi reçus étant appliqués à un système de calculateurs dans lequel on détermine les positions du premier et du deuxième récepteurs, pour en déduire l'orientation dans l'espace de la partie de référence de la machine d'extraction qui porte l'organe d'excavation, et en ce qu'on prend en mémoire dans le système de calculateurs un modèle du site d'exploitation minière dans lequel apparaissent les parties déjà dégagées du site d'exploitation minière, en fonction du trajet parcouru par l'organe d'excavation.

2. Procédé selon la revendication 1, caractérisé en ce qu'on détermine la position de l'organe d'excavation, porté par la partie mobile de référence de la machine d'extraction, sur lequel il est impossible de monter un récepteur pour recevoir les signaux de mesure des satellites, d'après la position géodésique de la partie mobile de référence et suivant l'orientation de cette partie dans l'espace.

3. Procédé selon la revendication 1, caractérisé en ce qu'on exploite les signaux de mesure des satellites en recevant en même temps ces signaux sur un troisième récepteur qui sert de récepteur de référence et qui est installé à poste fixe dans une position géodésique connue, à une certaine distance de la machine d'extraction, les signaux des satellites étant ainsi reçus simultanément par le premier récepteur, par l'autre récepteur et par le récepteur de référence, pour être appliqués au système de calculateurs qui détermine les coordonnées du premier récepteur et de l'autre récepteur par rapport à celles du récepteur de référence.

4. Procédé selon la revendication 3, caractérisé en ce que le troisième récepteur qui sert de récepteur de référence est installé dans une position qui constitue un point de référence dans le système de coordonnées locales du site d'exploitation minière, et en ce qu'on utilise les positions déterminées du premier récepteur et de l'autre récepteur monté sur la machine d'extraction, en les introduisant dans un calculateur qui transforme les positions de ces récepteurs pour fournir leurs coordonnées dans ce système local.

5. Procédé selon la revendication 1, caractérisé en ce qu'on détermine périodiquement les positions des récepteurs à des intervalles de temps compris entre 0,3 sec. et 600 sec.

6. Procédé selon la revendication 1, caractérisé en ce qu'on détermine périodiquement les positions des récepteurs à des intervalles de temps de 1 sec.

7. Procédé selon la revendication 1, caractérisé en ce que l'autre récepteur est également monté sur la partie de référence de la machine d'extraction qui porte l'organe d'excavation.

8. Procédé selon la revendication 1, caractérisé en ce que l'autre récepteur est monté sur la structure porteuse qui est mobile sur le site de l'exploitation minière et qui porte la partie mobile de référence, et en ce qu'on détermine également dans le système de calculateurs la distance entre le premier récepteur et l'autre récepteur d'après les positions déterminées pour ces appareils.

9. Procédé selon la revendication 1 et 3, caractérisé en ce que la machine d'extraction à grand débit est constituée par un excavateur à roue à godets.
